# EUROPÄISCHE PATENTSCHRIFT

(11) **EP 2 462 039 B1**
(45) Veröffentlichungstag und Bekanntmachung des Hinweises auf die Patenterteilung: **19.06.2013**
(21) Anmeldenummer: 10732694.4
(22) Anmeldetag: 09.07.2010
(51) Int. Cl.: B65G 33/06, B65G 47/68

(54) **SCHNECKENFÖRDERVORRICHTUNG**
SCREW CONVEYOR DEVICE
DISPOSITIF TRANSPORTEUR À VIS

(30) Priorität: 06.08.2009 DE 102009028281
(43) Veröffentlichungstag der Anmeldung: 13.06.2012
(73) Patentinhaber: Robert Bosch GmbH, 70442 Stuttgart (DE)
(72) Erfinder: BLUMENSTOCK, Klaus, 74589 Satteldorf (DE); ZIEGLER, Jochen, 74589 Satteldorf (DE)
(86) Internationale Anmeldenummer: PCT/EP2010/059920
(87) Internationale Veröffentlichungsnummer: WO 2011/015423

(56) Entgegenhaltungen:
- FR-A1- 2 566 375
- US-A- 2 857 037
- US-A- 2 966 252
- US-A- 5 407 057

## Beschreibung

### Stand der Technik

Die vorliegende Erfindung betrifft eine Schneckenfördervorrichtung zur Förderung von Behältnissen, insbesondere Vials oder andere zylindrische Behältnisse.

Schneckenfördervorrichtungen für Behältnisse sind aus dem Stand der Technik in unterschiedlichen Ausgestaltungen bekannt. Beispielsweise zeigt die DE 19937011 A1 eine einzelne Auslaufschnecke, welche zum Abtransport von mit einem Stopfen verschlossenen Behältnissen vorgesehen ist. Diese einzelne Auslaufschnecke ist dabei im Anschluss an einen Drehteller angeordnet. Hierbei ergibt sich jedoch das Problem, dass die mittels des Drehtellers zugeführten Behältnisse bei der Übergabe beschädigt werden können oder auch Umfallen, insbesondere, wenn die Behältnisse sehr klein und hoch sind. Um dies zu verhindern, wird eine Vielzahl von sich drehenden Formatstemen vorgesehen, was die Fördervorrichtung jedoch sehr teuer macht und einen großen Bauraumbedarf einnimmt.

Aus der US 5407057 ist bereits ein Zuführsystem bekannt, welche zweireihig zugeführte Behältnisse über zwei Einlaufschnecken in eine einzige Reihe überführt.

### Offenbarung der Erfindung

Die erfindungsgemäße Schneckenfördervorrichtung mit den Merkmalen des Anspruchs 1 weist demgegenüber den Vorteil auf, dass sie sicher und ohne Beschädigungen Behältnisse, insbesondere Vials, fördern kann. Dabei können insbesondere auch sehr kleine Behältnisse oder sehr hohe (lange) Behältnisse problemlos gefördert werden. Dabei nimmt die erfindungsgemäße Schneckenfördervorrichtung nur einen relativ kleinen Bauraum ein und kann kostengünstig bereitgestellt werden. Dies wird erfindungsgemäß dadurch erreicht, dass die Schneckenfördervorrichtung eine erste und eine zweite Einlaufschnecke umfasst. Die erste Einlaufschnecke weist dabei einen ersten und einen zweiten Gangbereich auf, wobei ein erster Gang im ersten und zweiten Gangbereich gebildet ist und ein zweiter Gang nur im zweiten Gangbereich vorgesehen ist. Die zweite Einlaufschnecke weist einen dritten und einen vierten Gangbereich auf. Ferner ist ein Übergabebereich vorgesehen, an welchem die durch die zweite Einlaufschnecke geförderten Behältnisse auf die erste Einlaufschnecke übergeben werden. Der Übergabebereich ist dabei an der ersten Einlaufschnecke am Übergang vom ersten Gangbereich zum zweiten Gangbereich angeordnet, wobei alle durch die zweite Einlaufschnecke geförderten Behältnisse auf die erste Einlaufschnecke, genauer in den zweiten Gang am zweiten Gangbereich der ersten Einlaufschnecke, übergeben werden.

Die Unteransprüche zeigen bevorzugte Weiterbildungen der Erfindung.

Vorzugsweise ist der Übergabebereich unmittelbar an einem Übergang vom ersten Gangbereich zum zweiten Gangbereich der ersten Einlaufschnecke angeordnet. Hierdurch kann ein kurzer und kompakter Aufbau sichergestellt werden.

Weiter bevorzugt umfasst die Schneckenfördereinrichtung ferner eine zusätzliche Auslaufschnecke, wobei die zu fördernden Behältnisse vom zweiten Gangbereich der Einlaufschnecke auf die Auslaufschnecke übergeben werden.

Gemäß einer weiteren bevorzugten Ausgestaltung der Erfindung weist wenigstens einer der Gangbereiche an der Einlaufschnecke eine Gangtiefe auf, welche einem Durchmesser der zu fördernden Behältnisse entspricht oder welche größer als der Durchmesser zu fördernden Behältnisse ist. Hierdurch wird sichergestellt, dass die Behältnisse vollständig in den Schneckengang der Gangbereiche eintauchen und somit ein Risiko eines Umfallens oder Herausfallens signifikant vermindert wird.

Weiter bevorzugt weist die zweite Einlaufschnecke einen Bereich mit einem vergrößerten Durchmesser auf, in welchem der vierte Gangbereich vorgesehen ist. Der vierte Gangbereich ist dabei vorzugsweise direkt benachbart zum zweiten Gangbereich der ersten Einlaufschnecke angeordnet, so dass die Behältnisse in den Schneckengängen des zweiten Gangbereichs der ersten Einlaufschnecke und des vierten Gangbereichs der zweiten Einlaufschnecke weitergefördert werden. Besonders bevorzugt weist der vierte Gangbereich dabei lediglich genau eine vollständige Wendel auf, wobei die Wendel von einer Tiefe, bei der das zu fördernde Behältnis vollständig in den Schneckengang aufgenommen ist, bis auf eine Tiefe von Null verläuft. Hierdurch kann eine sichere Übergabe des Behältnisses von der zweiten Einlaufschnecke auf die erste Einlaufschnecke in einer Wendel, d.h., mit einer Umdrehung der zweiten Einlaufschnecke, realisiert werden.

Besonders bevorzugt sind die erste und zweite Einlaufschnecke parallel und unmittelbar nebeneinander angeordnet. Dies führt zu einer besonders kompakten und einfach aufgebauten Schneckenfördervorrichtung. Besonders bevorzugt ist dabei ein gemeinsames Führungsbauteil zwischen der ersten und zweiten Einlaufschnecke angeordnet. Somit sind die erste Einlaufschnecke an einer ersten Seite des Führungsbauteils und die zweite Einlaufschnecke an einer zweiten Seite des Führungsbauteils angeordnet. Eine Übergabe der Behältnisse von der zweiten Einlaufschnecke auf die erste Einlaufschnecke erfolgt dabei an einem in Förderrichtung liegenden Ende des Führungsbauteils.

Besonders bevorzugt sind der erste Gangbereich der ersten Einlaufschnecke und der dritte Gangbereich der zweiten Einlaufschnecke zueinander gegenläufig ausgerichtet, wobei die Steigungen des ersten und dritten Gangbereichs den gleichen Absolutwert aufweisen, jedoch unterschiedliche Vorzeichen. Hieraus resultiert auch eine unterschiedliche Rotationsrichtung der ersten und zweiten Einlaufschnecke, wobei die Rotationsgeschwindigkeit der beiden Einlaufschnecken bei gleichem Absolutbetrag der Steigungen gleich ist.

Weiter bevorzugt sind die Einlaufschnecken und die Auslaufschnecke mittels Schnellkupplungen wechselbar vorgesehen. Ein Antrieb der Einlaufschnecken und der Auslaufschnecke erfolgt vorzugsweise über einen elektrischen Motor, insbesondere einen Servomotor, und/oder ein Getriebe.

Die erfindungsgemäße Schneckenfördervorrichtung wird insbesondere in der Verpackungstechnik, beispielsweise bei Behältnissen oder Fläschchen für Medikamente o.ä. verwendet. Insbesondere kann die erfindungsgemäße Schneckenfördervorrichtung dabei in einer Auslaufzone der Anlage eingesetzt werden.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische, perspektivische Ansicht eines Schneckenförderers gemäß einem ersten Ausführungsbeispiel der Erfindung,
- Figur 2: eine schematische Draufsicht des in Figur 1 gezeigten Schneckenförderers,
- Figur 3: eine schematische, perspektivische Ansicht eines Schneckenförderers gemäß einem zweiten Ausführungsbeispiel der Erfindung,
- Figur 4: eine schematische Draufsicht des in Figur 3 gezeigten Schneckenförderers, und
- Figur 5: eine schematische, perspektivische Ansicht einer Verpackungsmaschine mit einem Schneckenförderer gemäß dem zweiten Ausführungsbeispiel.

### Bevorzugte Ausführungsformen der Erfindung

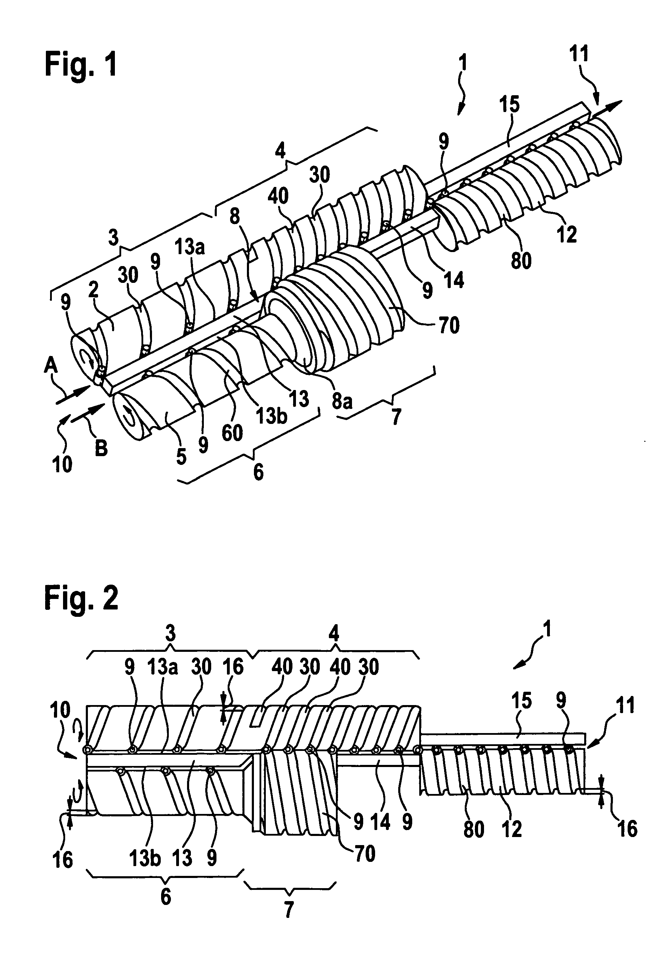

Nachfolgend wird unter Bezugnahme auf die Figuren 1 und 2 eine Schneckenfördervorrichtung 1 gemäß einem ersten bevorzugten Ausführungsbeispiel im Detail beschrieben.

Wie aus den Figuren 1 und 2 ersichtlich ist, umfasst die Schneckenfördervorrichtung 1 eine erste Einlaufschnecke 2 mit einem ersten Gangbereich 3 und einem zweiten Gangbereich 4. Im ersten Gangbereich 3 ist ein erster Gang 30 ausgebildet, welcher sich auch in den zweiten Gangbereich 4 fortsetzt. Im zweiten Gangbereich 4 ist ferner ein zweiter Gang 40 angeordnet, welcher die gleiche Steigung wie der erste Gang 30 aufweist. Eine Länge des ersten und zweiten Gangbereichs 3, 4 beträgt dabei jeweils die Hälfte der Gesamtlänge der ersten Einlaufstrecke 2. Der erste Gang 30 und der zweite Gang 40 sind auf einem gleichen Durchmesser der ersten Einlaufschnecke 2 vorgesehen.

Weiter umfasst die Schneckenfördervorrichtung 1 gemäß dem ersten Ausführungsbeispiel eine zweite Einlaufschnecke 5 mit einem dritten Gangbereich 6 und einem vierten Gangbereich 7. Der dritte Gangbereich 6 weist dabei einen dritten Gang 60 auf, der die gleiche Steigung hat wie der erste und zweite Gang 30, 40, nur mit entgegengesetztem Vorzeichen. Der vierte Gangbereich 7 weist einen vierten Gang 70 auf, welcher eine andere Steigung als der dritte Gang 60 aufweist. Ferner ist der vierte Gangbereich 7 auf einem größeren Durchmesser der zweiten Einlaufschnecke 5 gebildet, als der dritte Gangbereich 6 (vgl. Figur 2). Die Steigung des vierten Gangs 70 beträgt dabei die Hälfte der Steigung des dritten Gangs 60.

Weiter umfasst die Schneckenfördervorrichtung 1 einen Übergabebereich 8, in welchem Behältnisse 9, die mit der zweiten Einlaufschnecke 5 gefördert werden, von der zweiten Einlaufschnecke 5 auf die erste Einlaufschnecke 2 übergeben werden. Wie aus Figur 1 ersichtlich ist, ist der Übergabebereich 8 am Übergang vom dritten Gangbereich 6 zum vierten Gangbereich 7 gebildet und besteht im Wesentlichen aus einer breiten Fase 8a, welche den dritten Gangbereich 6 mit kleinerem Durchmesser mit dem vierten Gangbereich 7 mit größerem Durchmesser verbindet.

Die Schneckenfördervorrichtung 1 umfasst ferner eine Auslaufschnecke 12, welche die zu fördernden Behältnisse 9 von einem Ende der ersten Einlaufschnecke 2 übernimmt und zu einer Auslaufseite 11 fördert. An der Auslaufseite 11 kann dann ein beliebiges Transportmittel zur Weiterbeförderung oder ein Anlagenteil zum Füllen oder Verschließen, usw., der Behältnisse angeordnet sein. Die Einlaufseite ist in Figur 1 mit dem Bezugszeichen 10 bezeichnet. In der Auslaufschnecke 12 ist ein Gang 80 vorgesehen, um die Behältnisse 9 vom Ende der ersten Einlaufschnecke 2 zur Auslaufseite 11 zu fördern. Eine Steigung des Gangs 80 beträgt dabei die Hälfte der Steigung des ersten Gangs 30 bzw. des zweiten Gangs 40 der ersten Einlaufschnecke 2.

Weiterhin umfasst die erste Schneckenvorrichtung 1 mehrere Führungsbauteile, welche parallel zu den Einlaufschnecken 2, 5 bzw. der Auslaufschnecke 12 angeordnet sind. Genauer umfasst die Schneckenfördervorrichtung ein erstes Führungsbauteil 13, welches zwischen der ersten Einlaufschnecke 2 und der zweiten Einlaufschnecke 5 angeordnet ist. Das erste Führungsbauteil 13 führt dabei die Behältnisse 9 an einer ersten Seite 13a in Verbindung mit der ersten Einlaufschnecke 2 und an einer zweiten Seite 13b in Verbindung mit der zweiten Einlaufschnecke 5. Weiterhin ist ein zweites Führungsbauteil 14 vorgesehen, welches parallel zum zweiten Gangbereich 4 der ersten Einlaufschnecke 2 angeordnet ist. Da die zweite Einlaufschnecke 5 den vierten Gangbereich 7 mit vergrößertem Durchmesser aufweist, muss das zweite Führungsbauteil 14 nicht die gesamte Länge des zweiten Gangbereichs 4 aufweisen (siehe Figur 2). Ein drittes Führungsbauteil 15 ist parallel zur Auslaufschnecke 12 angeordnet und führt die mittels der Auslaufschnecke 12 zu fördernden Güter in Richtung zur Auslaufseite 11.

Eine Gangtiefe 16 der ersten und zweiten Einlaufschnecke 2, 4 sowie der Auslaufschnecke 12 ist bei allen Gängen gleich tief gewählt und beträgt die Hälfte eines Durchmessers der Behältnisse 9, welche einen zylindrischen Hauptkörper aufweisen. Hierdurch kann eine sichere Förderung der Behältnisse 9 ermöglicht werden.

Die erfindungsgemäße Schneckenfördervorrichtung 1 funktioniert dabei derart, dass die Behältnisse 9 von der Einlaufseite 10 her sowohl auf die erste Einlaufschnecke 2 als auch die zweite Einlaufschnecke 5 aufgegeben werden. Dies ist in Figur 1 durch die Pfeile A und B gekennzeichnet. Wie anhand der Steigungen mit unterschiedlichen Vorzeichen der ersten Einlaufschnecke 2 und der zweiten Einlaufschnecke 5 erkennbar ist, rotieren die beiden Einlaufschnecken 2, 5 dabei entgegengesetzt zueinander. Die Behältnisse 9 können beispielsweise von einem Übergabeteller oder einem Übergabestern o.ä. auf die erste und zweite Einlaufschnecke 2, 5 übergeben werden. Durch die Rotation der beiden Einlaufschnecken werden die Behältnisse 9 in Richtung zur Auslaufschnecke 12 weiter befördert. Die mit der zweiten Einlaufschnecke 5 beförderten Behältnisse 9 kommen in den Übergabebereich 8, wo sie dann von der zweiten Einlaufschnecke 5 auf die erste Einlaufschnecke 2 übergeben werden. Genauer werden die Behältnisse 9 von der zweiten Einlaufschnecke 5 in den zweiten Gang 40 der ersten Einlaufschnecke 2 übergeben, welcher im zweiten Gangbereich 4 der ersten Einlaufschnecke 2 neben dem ersten Gang 30 gebildet ist. Für eine stabile Förderung befinden sich die Behältnisse dabei einerseits in den Gängen 30 bzw. 40 der ersten Einlaufschnecke 2 und dem vierten Gang 70 der zweiten Einlaufschnecke 5.

Somit werden die Behältnisse 9 auf zwei separate Einlaufschnecken 2, 5 aufgegeben und am Übergabebereich 8 werden die Behältnisse der zweiten Einlaufschnecke 5 auf die erste Einlaufschnecke 2 übergeben, welche ab dieser Position noch den zweiten Gang 40 zusätzlich aufweist. Somit erfolgt eine Vereinigung der beiden Produktströme auf einen gemeinsamen Bereich der Einlaufschnecken, wobei eine Rotationsgeschwindigkeit der beiden Einlaufschnecken halbiert werden kann. Hiermit ist insbesondere eine vereinfachte und beschädigungsfreie Aufgabe der Behältnisse auf die beiden Einlaufschnecken möglich. Dadurch ergibt sich ein besonders produktschonender Transport, was insbesondere beim Transportieren von Medikamenten bzw. Glasfläschchen vorteilhaft ist. Am Ende der ersten Einlaufschnecke 2 werden die derart zusammengeführten Behältnisse 9 dann auf die Auslaufschnecke 12 übergeben. Die Drehzahl der Auslaufschnecke 12 ist dabei doppelt so groß wie die Drehzahl der Einlaufschnecken 2, 5. Es sei angemerkt, dass anstelle der Auslaufschnecke 12 auch direkt ein anderes Auslaufelement, beispielsweise ein Formatstern o.ä. vorgesehen sein kann.

Die erfindungsgemäße Schneckenfördervorrichtung 1 weist dabei sehr wenig Formatteile auf und ermöglicht eine leichte Anpassung an eine der Schneckenfördervorrichtung 1 nachfolgende Maschine, beispielsweise durch Wahl der Drehgeschwindigkeiten der Einlaufschnecken und der Auslaufschnecke. Dabei nimmt die erfindungsgemäße Schneckenfördervorrichtung 1 nur einen sehr kleinen Bauraum ein und kann besonders kostengünstig bereitgestellt werden. Auch ist ein einfacher Umbau auf einen einbahnigen Betrieb durch Entfernen der zweiten Einlaufschnecke 5 möglich. Somit kann eine hohe Flexibilität der Schneckenfördervorrichtung 1 erreicht werden, so dass diese für verschiedene Anwendungsfälle angepasst werden kann. Weiterhin sei angemerkt, dass die Auslaufschnecke 12 durch Wahl ihrer Steigung insbesondere auch auf eine Teilung einer Nachfolgemaschine angepasst werden kann. Besonders bevorzugt ist die Auslaufschnecke 12 dabei austauschbar, um eine einfache und schnelle Anpassung an eine neue Maschine zu ermöglichen. Es sei angemerkt, dass die beiden Einlaufschnecken 2, 5 und die Auslaufschnecke 12 beliebig angetrieben werden können, wobei ein Antrieb mittels eines Servomotors besonders bevorzugt ist. Weiterhin kann insbesondere auch die Auslaufschnecke 12 durch die nachfolgende Maschine angetrieben werden, so dass kein separater Antrieb für die Auslaufschnecke 12 notwendig ist.

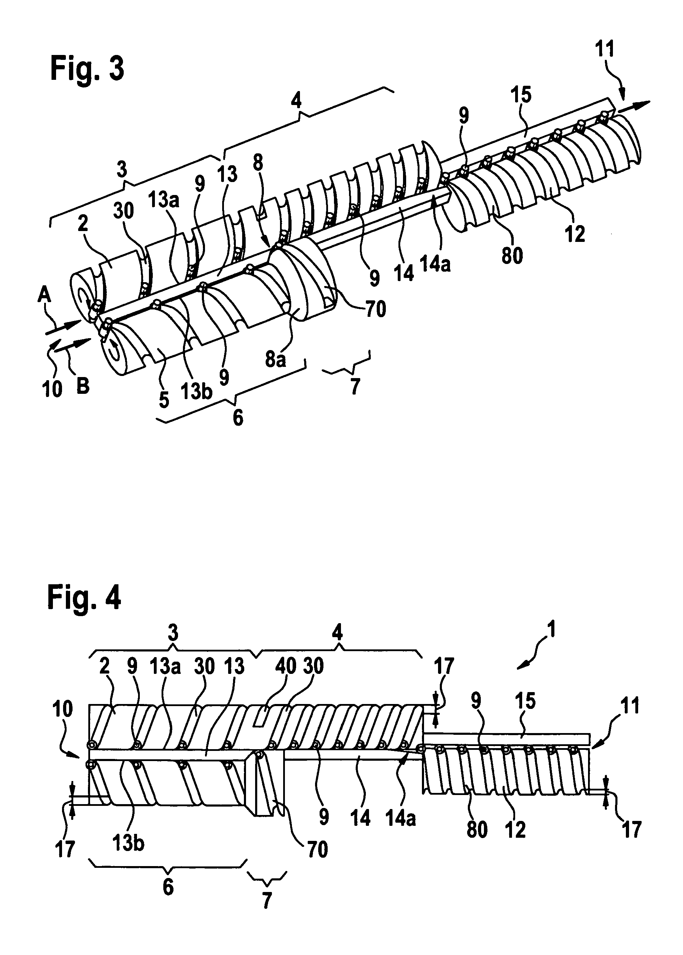

Nachfolgend wird unter Bezugnahme auf die Figuren 3 bis 5 eine Schneckenfördervorrichtung 1 gemäß einem zweiten Ausführungsbeispiel der Erfindung beschrieben, wobei gleiche bzw. funktional gleiche Teile mit den gleichen Bezugszeichen wie im ersten Ausführungsbeispiel bezeichnet sind.

Wie insbesondere aus Figur 4 ersichtlich ist, weist die Schneckenfördervorrichtung 1 des zweiten Ausführungsbeispiels eine anders gestaltete zweite Einlaufschnecke 5 auf. Die zweite Einlaufschnecke 5 des zweiten Ausführungsbeispiels umfasst einen vierten Gangbereich 7, welcher einen vierten Gang 70 mit lediglich einer Wendel auf. Weiterhin ist ein Durchmesser der zweiten Einlaufschnecke 5 im Bereich des vierten Gangbereichs 7 kleiner als im ersten Ausführungsbeispiel gewählt. Hierdurch kann ein möglichst geringer Achsabstand der beiden Einlaufschnecken 2, 5 realisiert werden.

Der vierte Gang 70 am vierten Gangbereich 7 der zweiten Einlaufschnecke 5 ist als genau eine umlaufende Wendel gebildet, wobei die genau eine Wendel von einer Tiefe, bei der das zu fördernde Behältnis vollständig in den vierten Gang 70 aufgenommen ist, bis auf eine Tiefe von Null verläuft. Bei der Tiefe von Null wird das zu fördernde Behältnis dabei dann vollständig auf den zweiten Gang 40 im zweiten Gangbereich 4 der ersten Einlaufschnecke 2 übergeben.

Weiterhin ist eine Gangtiefe 17 aller Gänge der Einlaufschnecke 2, 5 und der Auslaufschnecke 12 derart gewählt, dass die Gangtiefe 17 einem Durchmesser der Behältnisse entspricht. Dadurch tauchen die Behältnisse 9 vollständig in die Gänge ein (vgl. insbesondere Figur 4). Ferner ist am zweiten Führungsbauteil 14 ein sich verjüngender Übergangsbereich 14a gebildet, mit dessen Hilfe die Behältnisse 9 von dem Auslauf der zweiten Einlaufschnecke 2 auf die Auslaufschnecke 12 übergeben werden. Ansonsten entspricht die Schneckenfördervorrichtung 1 des zweiten Ausführungsbeispiels der des ersten Ausführungsbeispiels, so dass auf die dort gegebene Beschreibung verwiesen werden kann.

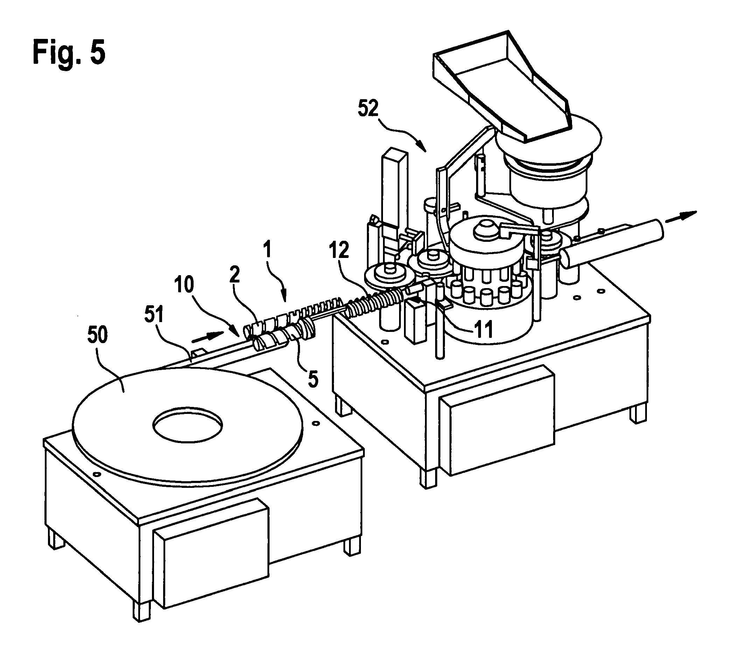

Figur 5 zeigt ein Anwendungsbeispiel der Schneckenfördervorrichtung 1 des zweiten Ausführungsbeispiels. Die Schneckenfördervorrichtung 1 wird dabei zur Förderung von Behältnissen von einem Drehteller 50 mit einem zweibahnigen Einlaufband 51 zu einer Verschließmaschine 52 gefördert. Die erfindungsgemäße Schneckenfördervorrichtung 1 übernimmt dabei die Vereinigung der beiden Behältnisströme vom zweibahnigen Einlaufband auf einen Auslaufstrom (Auslaufseite 11), welcher dann einem Formatstem der Verschließmaschine 52 übergeben werden. Die erfindungsgemäße Schneckenfördervorrichtung kann jedoch auch bei anderen Einsatzgebieten, insbesondere in Verbindung mit Verpackungsmaschinen, eingesetzt werden.

## Patentansprüche

1. Schneckenfördervorrichtung zur Förderung von Behältnissen (9), umfassend
- eine erste Einlaufschnecke (2) mit einem ersten Gangbereich (3) und einem zweiten Gangbereich (4), wobei im ersten Gangbereich (3) ein erster Gang (30) ausgebildet ist und im zweiten Gangbereich (4) der erste Gang (30) und ein zweiter Gang (40) ausgebildet sind,
- eine zweite Einlaufschnecke (5) mit einem dritten Gangbereich (6) und einem vierten Gangbereich (7), wobei im dritten Gangbereich (6) ein dritter Gang (60) und im vierten Gangbereich (7) ein vierter Gang (70) ausgebildet sind, und
- einen Übergabebereich (8), an welchem die Behältnisse (9) von der zweiten Einlaufschnecke (5) auf den zweiten Gang (40) der ersten Einlaufschnecke (2) übergeben werden, so dass die erste Einlaufschnecke (2) im zweiten Gangbereich (4) alle Behältnisse aus der ersten und zweiten Einlaufschnecke fördert.

2. Schneckenfördervorrichtung nach Anspruch 1, **dadurch gekennzeichnet, dass** der Übergabebereich (8) am Übergang des ersten Gangbereichs (3) zum zweiten Gangbereich (4) der ersten Einlaufschnecke (2) angeordnet ist.

3. Schneckenfördervorrichtung nach einem der vorhergehenden Ansprüche, ferner umfassend eine Auslaufschnecke (12), welche in Förderrichtung der ersten Einlaufschnecke (2) nachgeordnet ist.

4. Schneckenfördervorrichtung nach einem der vorhergehenden Ansprüche, **dadurch gekennzeichnet, dass** eine Tiefe der Gänge (30, 40, 60, 70, 13) einem Durchmesser der zu fördernden Behältnisse entspricht oder tiefer ist.

5. Schneckenfördervorrichtung nach einem der vorhergehenden Ansprüche, **dadurch gekennzeichnet, dass** die zweite Einlaufschnecke (5) im Bereich des vierten Gangbereichs (7) einen vergrößerten Durchmesser aufweist.

6. Schneckenfördervorrichtung nach einem der vorhergehenden Ansprüche, **dadurch gekennzeichnet, dass** die zweite Einlaufschnecke (5) am vierten Gangbereich (7) einen Gang mit genau einer vollständigen Wendel aufweist.

7. Schneckenfördervorrichtung nach einem der vorhergehenden Ansprüche, **dadurch gekennzeichnet, dass** die erste und zweite Einlaufschnecke (2, 5) nebeneinander parallel angeordnet sind.

8. Schneckenfördervorrichtung nach einem der vorhergehenden Ansprüche, ferner umfassend ein erstes Führungsbauteil (13), welches zwischen der ersten Einlaufschnecke (2) und der zweiten Einlaufschnecke (5) angeordnet ist, wobei das erste Führungsbauteil (13) mit einer ersten Seite (13a) die Behältnisse in der ersten Einlaufschnecke (2) führt und mit einer zweiten Seite (13b) die Behältnisse der zweiten Einlaufschnecke (5) führt.

9. Schneckenfördervorrichtung nach einem der vorhergehenden Ansprüche, **dadurch gekennzeichnet, dass** eine Antriebsrichtung der ersten Einlaufschnecke (2) gegenläufig zu einer Antriebsrichtung der zweiten Einlaufschnecke (5) ist.

10. Schneckenfördervorrichtung nach einem der vorhergehenden Ansprüche, **dadurch gekennzeichnet, dass** die Einlaufschnecken (2, 5) und/oder die Auslaufschnecke (12) mittels eines elektrischen Antriebs, insbesondere eines regelbaren elektrischen Antriebs, angetrieben werden.

## Claims

1. Screw conveyor device for conveying containers (9), comprising
- a first inlet screw (2) having a first thread region (3) and a second thread region (4), wherein a first thread (30) is formed in the first thread region (3) and the first thread (30) and a second thread (40) are formed in the second thread region (4),
- a second inlet screw (5) having a third thread region (6) and a fourth thread region (7), wherein a third thread (60) is formed in the third thread region (6) and a fourth thread (70) is formed in the fourth thread region (7), and
- a transfer region (8) in which the containers (9) are transferred from the second inlet screw (5) onto the second thread (40) of the first inlet screw (2) such that the first inlet screw (2) conveys all the containers from the first and second inlet screws in the second thread region (4).

2. Screw conveyor device according to Claim 1, **characterized in that** the transfer region (8) is arranged at the transition from the first thread region (3) to the second thread region (4) of the first inlet screw (2).

3. Screw conveyor device according to either of the preceding claims, also comprising an outlet screw (12) which is arranged downstream of the first inlet screw (2) in the conveying direction.

4. Screw conveyor device according to one of the preceding claims, **characterized in that** a depth of the threads (30, 40, 60, 70, 13) corresponds to a diameter of the containers to be conveyed or is deeper.

5. Screw conveyor device according to the one of the preceding claims, **characterized in that** the second inlet screw (5) has an enlarged diameter in the region of the fourth thread region (7).

6. Screw conveyor device according to one of the preceding claims, **characterized in that** the second inlet screw (5) has a thread with precisely one complete coil in the fourth thread region (7).

7. Screw conveyor device according to one of the preceding claims, **characterized in that** the first and second inlet screws (2, 5) are arranged parallel to and alongside one another.

8. Screw conveyor device according to one of the preceding claims, also comprising a first guide component (13) which is arranged between the first inlet screw (2) and the second inlet screw (5), wherein the first guide component (13) guides the containers in the first inlet screw (2) with a first side (13a) and guides the containers in the second inlet screw (5) with a second side (13b).

9. Screw conveyor device according to one of the preceding claims, **characterized in that** a drive direction of the first inlet screw (2) is in the opposite direction to a drive direction of the second inlet screw (5).

10. Screw conveyor device according to one of the preceding claims, **characterized in that** the inlet screws (2, 5) and/or the outlet screw (12) are driven by means of an electric drive, in particular a controllable electric drive.

## Revendications

1. Dispositif transporteur à vis pour le transport de contenants (9), comportant :
- une première vis d'entrée (2) présentant une première région de filet (3) et une deuxième région de filet (4), un premier filet (30) étant réalisé dans la première région de filet (3) et le premier filet (30) et un deuxième filet (40) étant réalisés dans la deuxième région de filet (4),
- une deuxième vis d'entrée (5) présentant une troisième région de filet (6) et une quatrième région de filet (7), un troisième filet (60) étant réalisé dans la troisième région de filet (6) et un quatrième filet (70) étant réalisé dans la quatrième région de filet (7), et
- une région de transfert (8) au niveau de laquelle les contenants (9) sont transférés de la deuxième vis d'entrée (5) au deuxième filet (40) de la première vis d'entrée (2), de sorte que la première vis d'entrée (2) transporte dans la deuxième région de filet (4) tous les contenants de la première et de la deuxième vis d'entrée.

2. Dispositif transporteur à vis selon la revendication 1, **caractérisé en ce que** la région de transfert (8) est disposée au niveau de la transition de la première région de filet (3) à la deuxième région de filet (4) de la première vis d'entrée (2).

3. Dispositif transporteur à vis selon l'une quelconque des revendications précédentes, comportant en outre une vis de sortie (12) qui est disposée en aval de la première vis d'entrée (2) dans la direction de transport.

4. Dispositif transporteur à vis selon l'une quelconque des revendications précédentes, **caractérisé en ce qu'**une profondeur des filets (30, 40, 60, 70, 13) correspond à un diamètre des contenants devant être transportés ou est plus profonde.

5. Dispositif transporteur à vis selon l'une quelconque des revendications précédentes, **caractérisé en ce que** la deuxième vis d'entrée (5) présente un diamètre agrandi dans la région de la quatrième région de filet (7).

6. Dispositif transporteur à vis selon l'une quelconque des revendications précédentes, **caractérisé en ce que** la deuxième vis d'entrée (5) présente, au niveau de la quatrième région de filet (7), un filet comprenant exactement un tour complet.

7. Dispositif transporteur à vis selon l'une quelconque des revendications précédentes, caractérisé en ce la première et la deuxième vis d'entrée (2, 5) sont disposées parallèlement de manière juxtaposée.

8. Dispositif transporteur à vis selon l'une quelconque des revendications précédentes, comportant en outre un premier élément de guidage (13) qui est disposé entre la première vis d'entrée (2) et la deuxième vis d'entrée (5), le premier élément de guidage (13) guidant, par une première face (13a), les contenants dans la première vis d'entrée (2) et guidant, par une deuxième face (13b), les contenants de la deuxième vis d'entrée (5).

9. Dispositif transporteur à vis selon l'une quelconque des revendications précédentes, **caractérisé en ce qu'**un sens d'entraînement de la première vis d'entrée (2) est opposé à un sens d'entraînement de la deuxième vis d'entrée (5).

10. Dispositif transporteur à vis selon l'une quelconque des revendications précédentes, **caractérisé en ce que** les vis d'entrée (2, 5) et/ou la vis de sortie (12) sont entraînées au moyen d'un entraînement électrique, en particulier d'un entraînement électrique réglable.
